# EUROPÄISCHE PATENTSCHRIFT

(11) **EP 2 479 246 B1**
(45) Veröffentlichungstag und Bekanntmachung des Hinweises auf die Patenterteilung: **11.09.2013**
(21) Anmeldenummer: 12401002.6
(22) Anmeldetag: 10.01.2012
(51) Int. Cl.: B01J 8/00, B01J 8/22, C10L 3/08, C07C 1/04, C07C 1/06, C07C 9/04

(54) **Methansynthese aus Synthesegas in einem Blasensäulenreaktor**
Methane synthesis from synthesis gas in a bubble column reactor
Synthèse de méthane à partir de gaz de synthèse dans un réacteur à colonne à bulles

(30) Priorität: 22.01.2011 DE 102011009163
(43) Veröffentlichungstag der Anmeldung: 25.07.2012
(73) Patentinhaber: Karlsruher Institut für Technologie, 76131 Karlsruhe (DE)
(72) Erfinder: Bajohr, Siegfried, Dr., 69168 Wiesloch (DE); Graf, Frank, 76131 Karlsruhe (DE); Reimert, Rainer, Prof. Dr., 65510 Idstein (DE)

(56) Entgegenhaltungen:
- DE-A1-102008 013 617
- US-A- 2 789 888
- US-A- 3 989 734
- US-A1- 2007 010 688

## Beschreibung

Die vorliegende Erfindung betrifft eine Vorrichtung und ein Verfahren zur Herstellung von Methan (Substitute Natural Gas, SNG) aus Synthesegas. Ebenso betrifft die Erfindung die Verwendung von Blasensäulenreaktoren, die mit ionischen Fluiden (Ionic Liquids, IL) beschickt sind, zur Darstellung von Methan aus Synthesegas.

Die Technologie der SNG-Erzeugung wurde zunächst auf Basis von Synthesegasen aus Kohle entwickelt. Eine derartige Anlage wird z.B. in North Dakota (USA) im industriellen Maßstab betrieben, wo ca. 18000 t Kohle pro Tag verarbeitet werden. Die Methansynthesereaktion findet in einem zweistufigen Prozess in adiabaten Reaktoren (Festbett) statt.

Allerdings stellen fossile Energieträger eine begrenzte Ressource dar und werden nicht dauerhaft auf einem günstigen Preisniveau verfügbar sein. Eine Lösung hierzu ist es, Biomasse an Stelle von fossilen Energieträgern als Brennstoff einzusetzen. Besonders im Fokus steht hierbei die ligninhaltige Biomasse (Holz). Ligninhaltige Biomasse kann thermochemisch durch Vergasung zu Synthesegas (H₂/CO- oder CO₂/H₂-Gemisch) umgewandelt werden. Dieses kann anschließend durch Methanisierung zu SNG umgewandelt werden.

Aufgrund der häufig geringen Energiedichte vieler Arten von ligninhaltiger Biomasse sind Transporte über weite Strecken (um die Biomasse verfügbar zu machen) energetisch nicht sinnvoll. Daher ist es erstrebenswert, die Biomasse möglichst effizient am Ort der Erzeugung zu einem chemischen Energieträger umzuwandeln, dessen Verteilung durch die bereits bestehende Infrastruktur möglich ist. Eine derartige Möglichkeit stellt die Erzeugung von SNG (Substitute Natural Gas) und dessen Einspeisung ins flächendeckend verfügbare Erdgasnetz dar. Bei diesen dezentral anfallenden Rohstoffen sind deutlich kleinere Anlagengrößen sinnvoll, die dann allerdings auch andere Anlagenkonzepte erfordern, als dies bei der etablierten Kohlevergasung der Fall ist.

Bei der thermochemischen Erzeugung von SNG findet die Methanisierungsreaktion Anwendung, welche Synthesegas zu Methan und Wasserdampf umsetzt:

CO + 3 H₂ ⇔ CH₄ + H₂O_{g} Δ_{R}H: -206 kJ/mol

CO₂ + 4 H₂ ⇔ CH₄ + 2 H₂O_{g} Δ_{R}H: -165 kJ/mol

Diese Reaktion ist durch den großen Anteil frei werdender Reaktionswärme stark exotherm. Eine effiziente Abfuhr dieser Wärme aus dem Reaktor ist daher als eine der größten technischen Herausforderungen des Gesamtprozesses anzusehen.

DE 601 24 879 T2 offenbart ein Verfahren zur Herstellung von Kohlenwasserstoffen mit einer Kettenlänge von mehr als 5 Kohlenstoffatomen aus einem Gemisch umfassend CO und H₂ nach dem Fischer-Tropsch-Verfahren in einem Blasensäulenreaktor. In diesem Verfahren wird vermieden, dass sich über eine Parallelreaktion Methan bildet. Dies geschieht im Wesentlichen über die thermische Kontrolle, da die Methansynthese eine höhere Aktivierungsenergie hat als die Fischer-Tropsch-Synthese, d.h. sie läuft bei einer höheren Temperatur ab. Gleichzeitig ist die Methanisierungsreaktion stärker exotherm als die Fischer-Tropsch-Synthese, weshalb es einer wesentlich effizienteren Temperaturkontrolle bedarf. Die Problematik der Produktkontamination mit der Flüssigphase im Reaktor aufgrund des hohen Dampfdrucks der verwendeten Flüssigkeit wird hier nicht gelöst.

US 3.989.734 A1 beschreibt ein Verfahren zur Konversion von Synthesegas (CO und H₂) in CH₄ in einem Reaktor mit hochsiedenden Kohlenwasserstoffen oder Silikonölen in der Flüssigphase. Bei den gegebenen Reaktionsbedingungen der Methansynthese (300 °C - 450 °C) sind diese Substanzen jedoch nur begrenzt stabil. Es kommt u. U. zu einer ungewollten Degradation, die mit Funktionsstörungen oder gar der Zerstörung der Reaktoren einhergeht. Weiterhin wiesen die eingesetzten Kohlenwasserstoffen oder Silikonöle einen erheblichen Dampfdruck auf, der dazu führt, dass ein Teil der Flüssigphase permanent in der Gasphase ausgetragen wird und anschließend als Verunreinigung in nachgeschalteten Anlagenteilen anfällt und von den gewünschten Reaktionsprodukten abgetrennt werden muss. Dies ist stets mit hohen technischem Aufwand und Kosten verbunden. Aus diesem Grund hat sich die Methansynthese im Dreiphasenreaktor nicht durchsetzen können. Zentrales Problem bei der vorgestellten Anlage ist das Temperaturmanagement, das hier ein sehr sensibles System darstellt. In Abhängigkeit von der Eduktgaszusammensetzung, dessen relativ niedrige Temperatur, der frei werdenden Reaktionswärme, der Verdampfungswärme des Flüssigmediums und der rezyklierten Flüssigkeit entsteht eine Art Wärmesenke, die relativ leicht aus dem Gleichgewicht geraten kann. Eine absolute Wärmekontrolle, mit welcher der Reaktor immer im Temperaturoptimum fährt, ist mit diesem Konzept nicht erreichbar.

Langensiepen und Hammer beschreiben in "Zum dynamischen Verhalten eines Blasensäulen-Reaktors mit suspendiertem Katalysator für die Methanisierung von Kohlenmonoxid" (1974) Chemie-Ing.-Techn. 24:1051 und in "Zur Simulation und Optimierung der katalytischen Methanisierung von Kohlenmonoxid in einem Gas/Flüssigkeits-Reaktor" (1972) Chemie-Ing.-Techn. 11:712-716 Studien, bei welchen Blasensäulenreaktoren für die Methanisierung von CO verwendet wurden. Die Flüssigphase stellt jeweils geschmolzenes Hartparaffin dar. In diesen Studien wurden lediglich die Grundprinzipien des Prozesses beschrieben, die Nachteile für den wirtschaftlichen Betrieb, wie z.B. Produktkontamination durch das Paraffin und dessen Zersetzungsprodukte bzw. das sensible Temperaturmanagement der exothermen Reaktion sind hier nicht thematisiert.

US 2,789,888 offenbart eine Vorrichtung für die Synthese organischer Substanzen ausgehend von gasförmigen Edukten in Anwesenheit eines Katalysators, der in einem Öl suspendiert ist. Vorzugsweise wird die Vorrichtung für die Fischer-Tropsch-Synthese aus Synthesegas verwendet. Die Reaktion wird in einem zylindrischen Behälter durchgeführt, durch welches das Öl zirkulieren kann. Optional wird auch ein Wärmetauscher beschrieben, der mit dem zirkulierenden Öl beschickbar ist. Die Verwendung von ionischen Flüssigkeiten wird nicht offenbart.

US 2007/0010688 A1 beansprucht ein Verfahren zur Oxidierung von Aldehyden in einer ionischen Flüssigkeit. Die ionische Flüssigkeit ist bei diesem Verfahren gleichzeitig Lösemittel und Katalysator. Die Anwesenheit eines Katalysators in Partikelform ist nicht offenbart. In einer Ausführungsform wird das Verfahren in einer Blasensäule durchgeführt, welches mit einem System zum Kühlen und Heizen außerhalb des Reaktors ausgestattet ist. Dieses Dokument beschreibt kein Verfahren zur Methanherstellung aus Synthesegas.

Wünschenswert wäre allerdings, wenn die Methansynthese aus Synthesegas mit einer kompakten, preiswerten und möglichst einstufigen Anlage durchgeführt werden könnte. Hierzu bedarf es vor Allem einer effizienten Wärmeabfuhr, sodass die Reaktion im optimalen Temperaturbereich durchgeführt werden kann. In diesem Zusammenhang ist es wichtig, ein Reaktionsfluid bereitzustellen, das selbst einen niedrigen Dampfdruck hat und zugleich sehr stabil ist, sodass keine Degradation stattfindet und das Fluid nicht über die Gasphase ausgetragen wird. Des Weiteren sollen in dem Fluid hochaktive Katalysatoren gezielt nutzbar gemacht werden.

Um diese Nachteile des Stands der Technik zu überwinden, ist es Aufgabe der Erfindung, ein Verfahren für die Methansynthese vorzuschlagen, die in einem Dreiphasenreaktor durchgeführt wird. Insbesondere soll diese Synthese in einer ökonomisch sinnvollen Weise in (dezentralen) Anlagen mit einem energetischen Biomasseeinsatz von ca. 10 bis 200 MW (entspricht einer Methanproduktion von ca. 500 bis 10000 m³/h (NTP)) durchgeführt werden. Weiterhin ist es Aufgabe der Erfindung, die im Reaktor entstehende Reaktionswärme auszutragen bzw. eine effiziente Wärmekontrolle zu gewährleisten. Aufgabe der Erfindung ist es weiterhin, den Reaktor mit einer Flüssigphase zu beaufschlagen, die thermisch stabil ist und einen möglichst niedrigen Dampfdruck hat. Letztlich ist es Aufgabe der Erfindung die Verwendung von Blasensäulenreaktoren für die Herstellung von Methan aus Synthesegas vorzuschlagen.

Die vorliegende Erfindung löst die Aufgabe durch das in Anspruch 1 beanspruchte Verfahren und die in Anspruch 6 beanspruchte Verwendung. Bevorzugte Ausführungsformen des Verfahrens sind in den rückbezogenen Ansprüchen beschrieben.

Die Anlage umfasst einen Blasensäulenreaktor, in welchem die Methanisierungsreaktion stattfindet.

Im Rahmen der vorliegenden Erfindung ist ein Blasensäulenreaktor ein Dreiphasensystem (fest-flüssig-gasförmig), in welchem der Katalysator als dispergierte Feststoffphase vorliegt. Sowohl Edukte als auch die Produkte liegen in der Gasphase vor. Die Flüssigphase dient im erfindungsgemäßen Reaktor hauptsächlich als Suspendiermedium für den Katalysator und als Wärmeträger für den Austrag der überschüssigen Reaktionswärme. Die Festphase weist eine geringe Feststoffpartikelgröße und somit eine große spezifische Oberfläche auf. Beim Blasensäulenreaktor werden die Katalysatorpartikel durch die aufsteigenden Gasblasen aufgeschwemmt. Somit kommt es zur Einstellung eines Sedimentationsgleichgewichts und zur Abtrennung der Flüssigkeit von der Suspension. Hinsichtlich des Wärmeaustauschs eignet sich der Blasensäulenreaktor am besten, da der Wärmeübergang vom Katalysator in die Flüssigkeit aufgrund der kleinen Katalysatorpartikel, der großen Austauschoberfläche und dem großen Verhältnis von Flüssigkeit zu Katalysator begünstigt wird. Die Methansynthese ausgehend von H₂ und CO oder H₂ und CO₂ geschieht an der Kontaktfläche des Katalysators.

Die Flüssigphase spielt in diesem Zusammenhang eine zentrale Rolle, denn durch sie erhält man eine einfache Fahrweise des Reaktors und ein gutes Temperaturmanagement: Die Flüssigphase als Wärmeträger ist einfach förderbar, was eine gute Temperatursteuerbarkeit und eine isotherme Reaktionsführung ermöglicht. Besonders vorteilhaft für das Temperaturmanagement ist es, wenn der Wärmeträger eine hohe spezifische Wärmekapazität aufweist. Eine temperaturabhängige Dosierung von Frischgas ist nicht erforderlich.

Als Flüssigphase werden im Rahmen der vorliegenden Erfindung ionische Fluide eingesetzt. Ionische Fluide (*engl.* ionic liquids - IL) sind Flüssigkeiten, welche ausschließlich aus Ionen bestehen. IL grenzen sich von klassischen Salzschmelzen durch ihren niedrigen Schmelzpunkt von Tₛ < 100 °C ab. Die geringen Schmelztemperaturen resultieren aus dem makromolekularen (organischen) Aufbau der beteiligten Ionen. Aufgrund der Kombinierbarkeit einer Vielzahl von Kationen und Anionen existieren sehr viele unterschiedliche Verbindungen. Zu den bekannten Vertretern zählen Ammonium-, Imidazolium-, Phosphonium-, und Pyridiniumstämmige Verbindungen. Beispiele gebräuchlicher Vertreter von Anionen sind Trifluoromethanesulfonate, Bis(trifluoromethyl-sulfonyl)imide, Ethylsulfate, Tetraflouroborate oder Hexaflourophosphate.

Die große Zahl möglicher Strukturen und Kombinationen von ionischen Fluiden hat bisher keine allgemeine Beschreibung von physikalischen und chemischen Eigenschaften zugelassen. Ionische Flüssigkeiten sind als Stoffgruppe zu verstehen, deren spezifische Eigenschaften durch Variation der Kationen-Anionen-Paarung gezielt auf die Anforderungen eines Prozesses eingestellt werden können.

Die im vorliegenden Fall gewünschten Auswahlkriterien zur Eignung als Wärmeträger für die Methanisierung sind:
1. eine niedrige Schmelztemperatur (< 25 °C) und niedrige Viskosität, denn dadurch ist eine einfache Handhabung und gute Förderbarkeit (Pumpe) gewährleistet,
2. eine hohe Zersetzungstemperatur von mehr als 250°C,
3. eine gute Löslichkeit der Reaktanden und eine hohe Diffusionsgeschwindigkeit im IL führen zu einer hohen Reaktionsrate mit guter Selektivität zu Methan,
4. eine hohe Wärmekapazität, damit ein guter Wärmeaustrag erhalten wird und
5. ein niedriger Dampfdruck, damit die Produktkontamination verhindert wird.

Die Vielzahl von Anionen und Kationen, die aktuell bzw. zukünftig zur Verfügung stehen, erlauben es dem Fachmann eine sinnvolle Auswahl zu treffen, um den gegebenen Kriterien zu entsprechen.

Die Anlage umfasst des Weiteren eine Eduktgaszuleitung und eine Produktgasableitung, wobei die Gasströmungsrichtung im Reaktor von unten nach oben ist. Auf diese Weise werden die Katalysatorpartikel in einem Sedimentationsgleichgewicht gehalten.

Die Anlage umfasst weiterhin eine Temperiervorrichtung, die sich außerhalb des Blasensäulenreäktors befindet. Das ionische Fluid kann als Wärmeträger durch den Reaktor hindurch und aus dem Reaktor hinaus zu der Temperiervorrichtung gefördert werden. Vorzugsweise ist die Anlage daher mit einer Umwälzvorrichtung ausgestattet. Die Strömungsrichtung innerhalb des Reaktors ist vorzugsweise in der gleichen Richtung wie der Gasstrom orientiert, also von unten nach oben. Dem IL wird außerhalb des Reaktors mittels einer Temperiervorrichtung die überschüssige Wärme entzogen, bevor es wieder zurück in den Reaktor geleitet wird.

Optional kann diese Abwärme als Nutzenergie umgewandelt werden, was die Gesamteffizienz der Anlage noch erhöht. Die Temperiervorrichtung kann in Form eines Wärmetauschers ausgestaltet sein.

Der im Reaktor verwendete Katalysator ist ein Feststoff, dessen Partikelgröße möglichst klein sein sollte, sodass sich ein Sedimentationsgleichgewicht einstellen kann, wodurch der Katalysator gleichmäßig im Reaktor verteilt vorliegt. Vorzugsweise haben die Katalysatorpartikel einen Durchmesser 0,01 bis 200 µm.

Der Zustand des Sedimentationsgleichgewichts ist ein Zusammenspiel der Auftriebskräfte der aufsteigenden Gasblasen bei gegebenem Druck und deren Adhäsion an die Katalysatorpartikel sowie der Gegenstromgeschwindigkeit des Fluids. Allgemein wird die Hydrodynamik im Blasensäulenreaktor aus spezifischen Kenngrößen des Reaktionssystems, insbesondere des Gas-Holdups, der Verweilzeit der Gase und des Drucks im Reaktor, korreliert.

Der Gas-Holdup bezeichnet das Verhältnis aus dem Volumen der Gasphase (Gasblasen) im Reaktor und dem Gesamtvolumen des Reaktors (=Dreiphasensystem: Gasblasen + Flüssigkeit + Katalysator). Vorzugsweise liegt der Gas-Holdup des Blasensäulenreaktors zwischen 10% und 25%.

Die Verweilzeit des Gases im Reaktor liegt vorzugsweise bei mindestens 1 Sekunde. Die Dimensionierung des Reaktors, d.h. das Verhältnis von Höhe zu Durchmesser und die Durchströmungsgeschwindigkeit der Gasphase kann der Fachmann auf einfache Weise anpassen.

Der eingestellte Druck des Reaktors ist vorzugsweise zwischen 1 bar und 100 bar eingestellt. In diesem Druckbereich sind gute Umsätze zu erzielen. Die Reaktionsgase lösen sich allerdings besser, je höher der Druck ist.

Bei dem gegebenen Gas-Holdup und der Verweilzeit von 1 s ist das Reaktorvolumen vorzugsweise zwischen 7 und 140 m³ ausgelegt. Dies entspricht einem Brennstoffäquivalent zwischen 10 MW (entspricht 500 m³/Stunde CH₄) und 200 MW (entspricht 10000 m³/Stunde CH₄).

Bevorzugter weise wird ein Nickelkatalysator eingesetzt. Nickelkatalysatoren zeigen bei T = 200 °C - 400 °C eine sehr gute Methanisierungsaktivität. Allerdings muss bei der Verwendung von Nickel-Katalysatoren die Bildung von Nickelcarbonylen vermieden werden (=> T > ca. 210 °C), da diese unweigerlich zur Zerstörung des Katalysators durch Austrag der Aktivkomponente beitragen. Nickelkatalysatoren haben den Vorteil, dass sie sehr preiswert sind.

Alternativ können Rutheniumkatalysatoren oder andere hochaktive Edelmetall-Katalysatoren, vorzugsweise aus der Platingruppe, eingesetzt werden, die ebenfalls sehr aktiv und selektiv die Methanisierungsreaktion katalysieren. Durch die hervorragende Wärmeabfuhr aus der Blasensäule mittels der Anlage ist der Einsatz dieser hochaktiven Katalysatoren erst möglich, welche z.B. bei der Flüssigphasenhydrierung verwendet werden und in den etablierten Systemen zur Methansynthese bisher nicht eingesetzt werden, da bei diesen Reaktortypen keine ausreichend gute Wärmeabfuhr gewährleistet werden kann. Diese Katalysatoren sind auch bei niedrigeren Temperaturen aktiv; eine ausreichend hohe Methanisierungsaktivität findet bereits ab 150 °C statt.

In einer weiteren bevorzugten Ausführung umfasst die Anlage zur Herstellung von Methan noch einen vorgeschalteten Reaktor, mit welchem Biomasse, bevorzugt ligninhaltige Biomasse, thermochemisch zu CO- und H₂-haltigem Synthesegas oder zu CO₂- und H₂-haltigem Synthesegas vergast werden kann und eine daran anschließende Gasaufbereitung. Die thermochemische Vergasung und die daran anschließende Gasaufbereitung sind aus dem Stand der Technik bekannt. Mit Hilfe dieser Verfahren kann anfallende Biomasse direkt zum Eduktgas für die Methanisierung umgesetzt werden.

Die Verwendung eines Blasensäulenreaktors mit mindestens einem ionischen Fluid in der Flüssigphase, in welchem der Katalysator in Partikelform als Festphase suspendiert ist, zur Methansynthese aus CO- und H₂-haltigem Eduktgas oder aus CO₂- und H₂-haltigem Eduktgas ist ebenfalls Bestandteil der vorliegenden Erfindung.

Die Erfindung umfasst weiterhin ein Verfahren zur Herstellung von Methan aus Synthesegas, d.h. aus einem Gasgemisch, das H₂ und CO oder CO₂ und H₂ enthält.

In einer bevorzugten Ausführung des Verfahrens wird das Synthesegas, das CO und H₂ oder CO₂ und H₂ enthält, thermochemisch aus Biomasse hergestellt.

Die Synthese wird in einem Blasensäulenreaktor durchgeführt. Im Dreiphasensystem des Blasensäulenreaktors besteht die Flüssigphase aus mindestens einem ionischen Fluid, in dem der Katalysator suspendiert ist. Die bevorzugten Katalysatoren und deren Größe sind oben bereits erwähnt.

Der Eduktgasstrom, der CO und H₂ oder CO₂ und H₂ enthält, wird in die Katalysatorsuspension eingeleitet. Vorzugsweise wird das Eduktgas mit einem Druck von 1 bis 100 bar beaufschlagt. Das Eduktgas durchströmt die Katalysatorsuspension im Reaktor von unten nach oben, wobei es zu den Produktgasen Methan und Wasser umgesetzt wird. Bei den gegebenen Reaktortemperaturen liegt das Wasser gasförmig vor. Dieser Wasserdampf steigt gemeinsam mit dem Methan, bzw. der Restgasfraktion, innerhalb des Reaktors an den oberen Teil des Reaktors, wo es aus der Suspension entweicht und am Reaktorkopf abgeleitet wird.

Die Aufreinigung, Trocknung bzw. gegebenenfalls die teilweise Rückführung von noch nicht umgesetztem Eduktgas erfolgt in separaten Anlagebestandteilen, auf die hier nicht näher eingegangen werden soll.

Ein wichtiger Bestandteil des erfindungsgemäßen Verfahrens ist das Temperaturmanagement, da, wie oben bereits erwähnt, die Reaktion stark exotherm ist. Der Austrag der überschüssigen Wärme aus dem Reaktor geschieht kontinuierlich mit Hilfe der Flüssigfraktion. Das heiße ionische Fluid wird mittels einer Fördereinrichtung, vorzugsweise am oberen Ende des Reaktors, aus dem Reaktor herausgepumpt, wo es einer Temperiervorrichtung zugeführt wird. Die Temperiervorrichtung dient dazu, dass das Fluid aus dem Reaktor auf eine der Methanisierungsreaktion (bei gegebenem Katalysator) optimale Temperatur gebracht wird. In erster Linie geht es darum, die Wärme abzuführen und das Fluid abzukühlen, bevor es wieder in den Reaktor zurückgeleitet wird.

Vorzugsweise wird eine Betriebstemperatur von 150 °C bis 350 °C eingestellt. In diesem Temperaturbereich findet eine Methanisierungsreaktion mit guter Ausbeute statt, wobei die Untergrenze für Edelmetallkatalysatoren und die Obergrenze für Nickelkatalysatoren steht. Weiterhin ist dies ein Temperaturbereich, bei welchem sich die meisten ionischen Fluide nicht zersetzen.

Optional kann mit Hilfe der Temperiervorrichtung der Reaktor bis zum Erreichen der die Aktivierungstemperatur, z.B. beim Anfahren des Reaktors, vorgeheizt werden.

Die Erfindung wird im Folgenden mit Ausführungsbeispielen und folgenden Figuren erläutert.
**Fig. 1** Fließschema der thermochemischen Umwandlung von Biomasse zu SNG.
**Fig. 2** Konzept zur Methanisierung in ionischen Flüssigkeiten
**Fig. 3** Schematischer Aufbau des Versuchsreaktors unter Laborbedingungen.
**Fig. 4** Temperaturabhängigkeit und Selektivität zu Methan im Blasensäulenreaktor

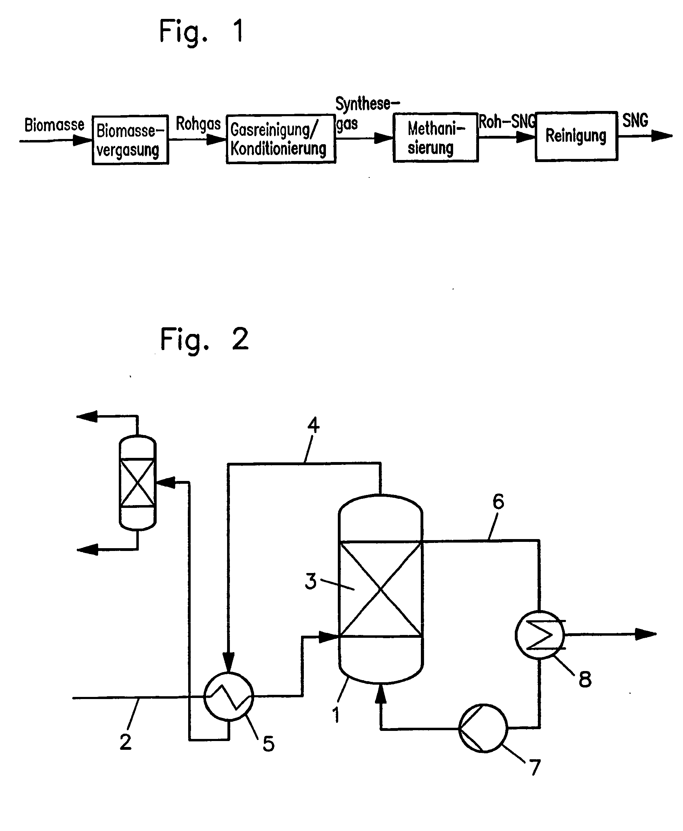

In **Fig. 1** ist in einem vereinfachten Fließschema dargestellt, wie der Prozess der SNG-Produktion aus Biomasse verläuft. Ligninhaltige Biomasse kann thermochemisch durch Vergasung zu Synthesegas (H₂/CO- oder H₂/CO₂-Gemisch) umgewandelt werden. Dieses kann anschließend durch Methanisierung zu SNG umgewandelt werden. Werden diese Anlagen dezentral betrieben, sollte deren Kapazität limitiert werden, weshalb sich das Anlagenkonzept mit Blasensäulenreaktor gem. **Fig. 2** anbietet.

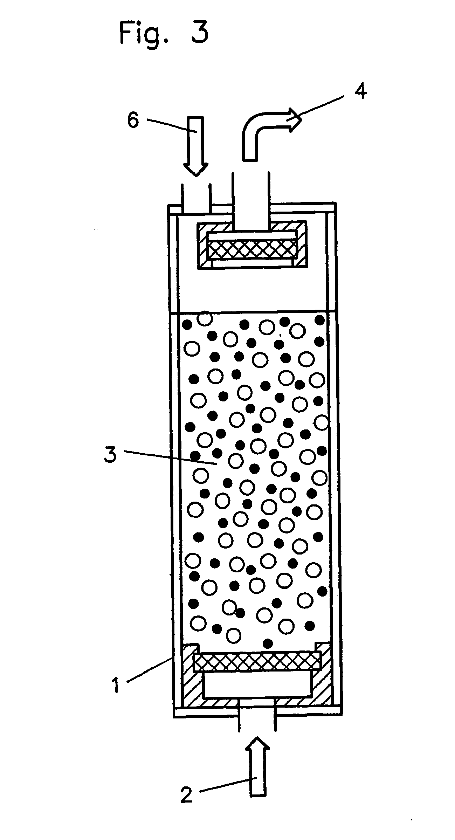

Der Methanisierungsschritt selbst erfolgt im Blasensäulenreaktor **(1),** der schematisch in **Fig. 3** dargestellt ist. Die Eduktgase **(2)** werden von unten in die Blasensäule **(3)** geleitet, worin sie am Katalysator nahezu vollständig zu Methan und Wasser umgesetzt werden. Diese Produktgase **(4)** werden am Reaktorkopf herausgeführt und im Kreuzstrom in einem Wärmetauscher **(5)** mit den Edukten abgekühlt. Gegebenenfalls können nicht umgesetzte Anteile an Eduktgasen abgetrennt und zurück in den Reaktor geführt werden. Das Produktgasgemisch wird anschließend in einem Trocknungsschritt von Wasser befreit. Die Flüssigphase ist ein ionische Fluid **(6),** das mit Hilfe einer Umwälzvorrichtung **(7)** aus dem Reaktor heraus zu einer Temperiervorrichtung **(8)** gepumpt wird. An dieser Temperiervorrichtung wird dem ionischen Fluid die überschüssige Wärme entzogen, sodass das Fluid bei niedrigerer Temperatur zurück in den Blasensäulenreaktor geleitet werden kann.

### Beispiel 1: Untersuchungen zur Auswahl geeigneter Methanisierungskatalysatoren

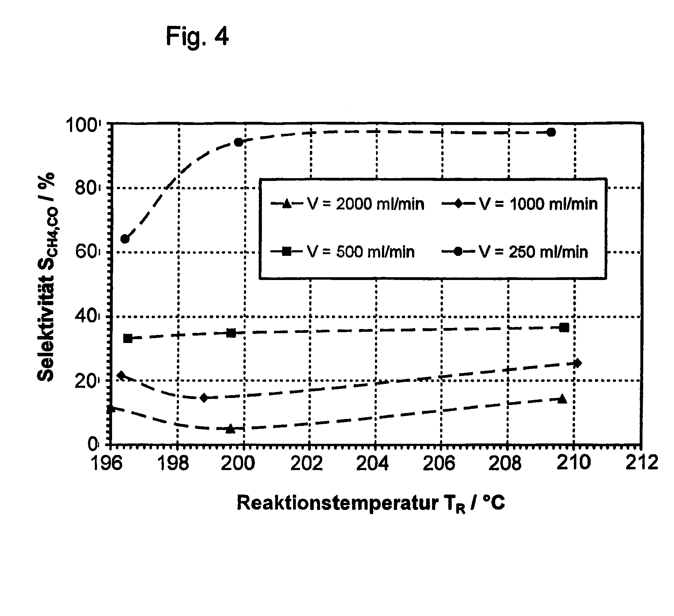

Bei der Methanisierung wird aufgrund seiner vergleichsweise geringen Kosten oft Nickel als Aktivkomponente der Katalysatoren eingesetzt. Nickel-Katalysatoren zeigen bei T = 200 °C - 400 °C eine sehr gute Methanisierungsaktivität. Allerdings muss bei der Verwendung von Nickel-Katalysatoren die Bildung von Nickel-Carbonylen vermieden werden (=> Tₘᵢₙ> ca. 210 °C), da diese zur Zerstörung des Katalysators durch Austrag der Aktivkomponente beitragen kann. Die Versuche wurden im Zwei-Phasen-System im Festbett in der in **Fig. 3** gezeigten Versuchsapparatur durchgeführt. Aus den ermittelten Daten wurde eine Reaktionskinetik bzgl. CO aufgestellt. Die Ergebnisse sind in der **Fig. 4** aufgeführt.

### Beispiel 2: Experimentelle Untersuchungen zur Methanisierung im Blasensäulenreaktor

Der Aufbau des Versuchsreaktors sowie die eingestellten Versuchsbedingungen sind nachfolgend in **Tabelle 1** dargestellt. Im Betrieb des Blasensäulenreaktors wurde ein kommerzieller Nickel-Katalysator in Pulverform (Partikeldurchmesser ca. 100 µm) verwendet. Es wurde zu diesen Versuchszwecken ein kommerzielles ionische Fluid gewählt, das nicht optimiert wurde. Gegeben den Laborbedingungen wurde nur ein Temperaturbereich bis maximal 210 °C gestestet, der, wie oben beschrieben, für den Nickel-Katalysator nicht optimal ist.

**Tabelle 1: Betriebsparameter des Versuchsreaktors**

| | |
|---|---|
| Temperaturbereich | 195 - 210 °C |
| Druck p | 4,5 bar |
| Reaktionsvolumen V | 110 cm³ |
| Ionisches Fluid | [BDiMIM] [BTA] |
| Flüssigkeitsgehalt ε | 78 - 88 % |
| Gasgehalt | 5-15 % |
| Feststoffgehalt ε | 7 % |
| Leerrohrgeschwindigkeit | < 5 cm/s |
| y_{H2,Ein}/y_{CO,Ein} | 5 |
| Partikelgröße Katalysator | ca. 100 µm |
| Katalysator | Ni |

Bei den gewählten Versuchsbedingungen wurde die Methanproduktion unter verschiedenen Bedingungen gemessen. In **Fig. 4** ist die Selektivität des umgesetzten Kohlenstoffmonoxids (CO) hin zum Zielprodukt Methan (CH₄) als Funktion der Temperatur und der Eingangsvolumenströme an Eduktgas aufgetragen. Es ist zu erkennen, dass bei geringen Strömen und damit steigender Verweilzeit die Selektivität zu Methan hin zunimmt. Diese unterschiedlichen Selektivitäten resultieren vermutlich aus den Änderungen der Hydrodynamik im System. Größere Eingangsvolumenströme erzeugen Blasen mit größeren Durchmessern. Diese steigen schneller in der Flüssigkeit auf, da im Allgemeinen die Zunahme der Gewichtskraft und der erhöhte Reibwiderstand an den einzelnen Blasen gegenüber der Erhöhung der Auftriebskraft vernachlässigbar sind. Die Gasblasen erfahren demnach bei erhöhten Durchsätzen eine Zunahme der relativen Geschwindigkeit an den Phasengrenzflächen zur Flüssigkeit.

## Patentansprüche

1. Verfahren zur isothermen Herstellung von Methan umfassend folgende Verfahrensschritte:
a) Bereitstellen eines Blasensäulenreaktors,
b) Beschicken des Reaktors mit mindestens einem ionischen Fluid, worin ein Katalysator in Partikelform suspendiert ist,
c) Einleiten eines CO- und H₂-haltigen Eduktgasstroms oder eines CO₂- und H₂-haltigen Eduktgasstroms am Reaktorboden in die im Blasensäulenreaktor vorliegende Katalysatorsuspension, wobei der Eduktgasstrom die Katalysatorsuspension durchläuft und dort zu Produktgas umgesetzt wird,
d) Abführen des Methan- und Wasserdampfhaltigen
Produktsgasstroms aus der Suspension am Reaktorkopf,
wobei das mindestens eine ionische Fluid kontinuierlich aus dem Blasensäulenreaktor zu einer Temperiervorrichtung gefördert wird, mittels deren die Temperatur des mindestens einen ionischen Fluids reguliert wird, bevor es zurück in den Reaktor geleitet wird.

2. Verfahren nach Anspruch 1, wobei die Strömungsrichtung der Flüssigphase im Blasensäulenreaktor von unten nach oben ist.

3. Verfahren nach einem der Ansprüche 1 oder 2, wobei der Reaktor auf eine Betriebstemperatur von 150 - 350 °C gebracht wird.

4. Verfahren nach einem der Ansprüche 1 bis 3, wobei der Druck im Blasensäulenreaktor zwischen 1 und 100 bar eingestellt wird.

5. Verfahren nach Anspruch 1 bis 4, wobei das CO- und H₂-haltige Eduktgas oder das CO₂- und H₂-haltige Eduktgas thermochemisch aus Biomasse hergestellt wird.

6. Verwendung eines Blasensäulenreaktors, der mit mindestens einem ionischen Fluid als Flüssigphase beschickt ist, in welchem der Katalysator in Partikelform als Festphase suspendiert ist, zur Synthese von Methan aus einem CO- und H₂-haltigen Gasgemisch oder aus einem CO₂- und H₂-haltigen Gasgemisch.

## Claims

1. Method for the isothermic production of methane, comprising the following process steps:
a) provision of a bubble column reactor,
b) feeding the reactor with at least one ionic fluid, in which a catalyst is suspended in particle form,
c) introduction of an educt gas flow containing CO and H₂ or of an educt gas flow containing CO₂ and H₂ at the reactor bottom into the catalyst suspension present in the bubble column reactor, wherein the educt gas flow passes through the catalyst suspension and where it is converted to product gas,
d) discharging the product gas flow containing methane and water vapour from the suspension at the reactor head,
wherein the at least one ionic fluid is continuously conveyed from the bubble column reactor to a temperation device by means of which the temperature of the at least one ionic fluid is regulated before it is conducted back into the reactor.

2. Method according to claim 1, wherein the flow direction of the liquid phase in the bubble column reactor is from bottom to top.

3. Method according to any one of claims 1 or 2, wherein the reactor is brought to an operating temperature of 150-350°C.

4. Method according to any one of claims 1 to 3, wherein the pressure in the bubble column reactor is set to between 1 and 100 bar.

5. Method according to any one of claims 1 to 4, wherein the educt gas containing CO and H₂ or the educt gas containing CO₂ and H₂ is thermochemically produced from biomass.

6. Use of a bubble column reactor; which is supplied with at least one ionic fluid as a liquid phase, in which the catalyst is suspended in particle form as a solid phase, for the synthesis of methane from a gas mixture containing CO and H₂ or from a gas mixture containing CO₂ and H₂.

## Revendications

1. Procédé de fabrication isotherme du méthane comprenant les étapes suivantes consistant à :
a) utiliser une colonne à bulles,
b) alimentér la colonne avec au moins un fluide ionique, le catalyseur étant en forme de particules en suspension,
c) introduire une veine de gaz d'éduit contenant CO et H₂ ou encore un éduit gazeux contenant CO₂ et H₂, par le fond de la colonne dans la suspension de catalyseur se trouvant dans la colonne à bulles, la veine d'éduit gazeux traversant la suspension de catalyseur pour êtré transformée en un produit gazeux,
d) évacuer la veine de produit gazeux contenant du méthane et de la
vapeur d'eau de la suspension par la tête de la colonne,
au moins un fluide ionique étant transféré en continu de la colonne à bulles vers un dispositif de mise en température par lequel on régule la température du fluide ionique avant de le reconduire dans la colonne.

2. Procédé selon la revendication 1,
**caractérisé en ce que**
la direction de passage de la phase fluide dans la colonne à bulles se fait de bas en haut.

3. Procédé selon la revendication 1 ou 2,
**caractérisé en ce que**
la colonne est mise à une température de fonctionnement comprise entre 150 et 350°C.

4. Procédé selon l'une des revendications 1 à 3,
**caractérisé en ce qu'**
on règle la pression dans la colonne à bulle entre 1 et 100 bars.

5. Procédé selon l'une des revendications 1 à 4,
**caractérisé en ce qu'**
on fabrique l'éduit gazeux contenant CO et H₂ ou CO₂ et H₂ par voie thermochimique à partir d'une biomasse.

6. Application d'une colonne à bulles garnie d'au moins un fluide ionique comme phase fluide, dans lequel le catalyseur à l'état de particules est en suspension comme phase solide pour la synthèse du méthane à partir d'un mélange gazeux contenant CO et H₂ ou à partir d'un mélange gazeux contenant CO₂ et H₂.
